(19) Europäisches Patentamt
European Patent Office
Office européen des brevets

(11) Veröffentlichungsnummer: **0 222 288**
**B1**

(12) # EUROPÄISCHE PATENTSCHRIFT

(45) Veröffentlichungstag der Patentschrift: **01.08.90**

(51) Int. Cl.[5]: **C08L 11/00**, C08F 36/18

(21) Anmeldenummer: **86115192.6**

(22) Anmeldetag: **03.11.86**

(54) **Elastomere Masse aus Polychloropren-Sol und Polychloropren-Gel und ihre Herstellung.**

(30) Priorität: **13.11.85 DE 3540143**

(43) Veröffentlichungstag der Anmeldung: **20.05.87 Patentblatt 87/21**

(45) Bekanntmachung des Hinweises auf die Patenterteilung: **01.08.90 Patentblatt 90/31**

(84) Benannte Vertragsstaaten: **DE FR GB**

(56) Entgegenhaltungen:
**DE-A- 2 008 673**
**DE-A- 3 507 825**
**US-A- 2 430 562**

(73) Patentinhaber: **BAYER AG, D-5090 Leverkusen 1 Bayerwerk(DE)**

(72) Erfinder: **Obrecht, Werner, Dr., Holderbergerstrasse 108, D-4130 Moers 2(DE)**
Erfinder: **Wendling, Peter, Franz-Marc-Strasse 9, D-5090 Leverkusen(DE)**
Erfinder: **Göbel, Wilhelm, Dr., Max-Beckmann-Strasse 37, D-5090 Leverkusen(DE)**
Erfinder: **Müller, Eberhard, Dr., Pfauenstrasse 19, D-4047 Dormagen(DE)**

**EP 0 222 288 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine elastomere Masse aus Polychloropren-Sol und Polychloropren-Gel mit verbesserten anwendungstechnischen Eigenschaften und ihre Herstellung.

Sol-Gel-Mischungen von Polychoroprenen sind bekannt. Durch Zusatz einer Gelkomponente zum Sol wird die Verarbeitbarkeit (z.B. Spritzquellung) der Kautschukmischungen verbessert. Die mechanischen Eigenschaften der Vulkanisate, insbesondere die Festigkeit, werden allerdings durch den Gelzusatz verschlechtert.

Es ist schon eine Reihe von Vorschlägen gemacht worden, wie einerseits die leichte Verarbeitbarkeit der Sol-Gel-Mischung erhalten bleibt, andererseits aber die mechanischen Eigenschaften der Mischung gegenüber der Solkomponente nicht verschlechtert werden (US-PS 3 655 827, DE-OS 2 536 372, US-PS 4 485 216). Diese Vorschläge basieren entweder auf ganz speziellen Lösungen, die das Produkt ökonomisch unattraktiv machen oder vermögen das Problem nur teilweise zu lösen.

Aufgabe war es daher, neue Sol-Gel-Mischungen bereitzustellen, die leicht verarbeitbar sind und über einen weiten Mischungsbereich keinen Abfall der mechanischen Eigenschaften zeigen.

Die Aufgabe wird erfindungsgemäß dadurch gelöst, daß man ein schwefelhaltiges Gelpolymer, das Xanthogenat- oder Carbamatfunktionen aufweist, mit einem schwefelfreien Solpolymer im Verhältnis 5:95 bis 75:25, vorzugsweise 10:90 bis 50:50 mischt.

"Schwefelhaltig" bzw. "schwefelfrei" ist so zu verstehen, daß in Gegenwart bzw. Abwesenheit von elementarem Schwefel oder eines üblichen Schwefelspenders polymerisiert wird. Polymere, die schwefelhaltige Endgruppen enthalten, weil sie beispielsweise unter Verwendung von Persulfaten als Initiatoren hergestellt werden, gelten daher nicht als schwefelhaltig.

Gegenstand der Erfindung sind somit elastomere Massen aus Polychloropren-Sol und Polychloropren-Gel im Verhältnis 95:5 bis 25:75, vorzugsweise 90:10 bis 50:50, wobei das Polychloropren-Sol schwefelfrei ist, dadurch gekennzeichnet, daß als Polychloropren-Gel ein schwefelhaltiges Gel mit Xanthogenat- oder Carbamatfunktionen verwendet wird.

Vorzugsweise wird ein Polychoropren-Gel verwendet, bei dem die Copolymerisation von Chloropren, Schwefel und gegebenenfalls weiteren mit Chloropren copolymerisierbaren Monomeren mit Hilfe eines Peroxoaktivators in Gegenwart von Xanthogenaten oder Dithiocarbamten, deren Anionen den Formeln

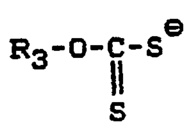

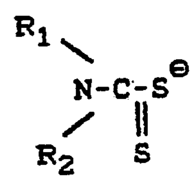

$R_1$, $R_2$, und $R_3$ einen gegebenenfalls substitutierten Alkyl-, Cycloalkyl- oder Arylrest bedeuten,

$R_1$ und $R_2$ darüber hinaus zusammen mit dem Stickstoffatom einen Ring bilden können und die cyclischen Substituenten Heteroatome enthalten können,

in wäßriger Emulsion durchgeführt wird, wobei die Gelbildung durch Einbau einer Vernetzersubstanz und/oder durch hohen Umsatz bewirkt wird.

Die Dithiocarbamate und Xanthogenate werden bevorzugt in Form ihrer Ammonium- und Alkalisalze, insbesondere Natrium- oder Kaliumsalze verwendet.

Vorzugsweise bedeuten $R_1$ und $R_2$ $C_1$-$C_4$-Alkyl, $R_3$ $C_1$-$C_8$-Alkyl oder 2,2-(2,4-Dioxapentamethylen)-butyl.

Vorzugsweise werden 0,05 bis 5,0, insbesondere 0,1 bis 3,0 Gew.-%, Natriumdibutyldithiocarbamat, bezogen auf Monomere der Gelpolymeren, oder eine entsprechende molare Menge eines anderen Dithiocarbamates oder 0,1 bis 5,0, insbesondere 0,5 bis 3,0 Gew.-%, Kaliumethyl-xanthogenat, bezogen auf Monomere des Gelpolymers, oder eine entsprechende molare Menge eines anderen Xanthogenates, eingesetzt.

Die Vernetzung der Latexteilchen erreicht man durch übliche Maßnahmen bei der Polymerisation oder in einer, dem Polymerisationsschritt nachgeschalteten, Vernetzungsstufe. Im einfachsten Fall erreicht man eine Vernetzung durch Polymerisation auf hohe Umsätze oder bei einem Monomerzulaufverfahren durch Polymerisation bei hohen internen Umsätzen (DE-AS 1.248.921). Für die Gelherstellung ist auch eine Copolymerisation mit multifunktionellen Comonomeren oder der Einsatz multifunktioneller Comonomerer in Kombination mit hohen Umsätzen möglich. Mögliche multifunktionelle Comonomere sind: Divinylbenzol, Divinylether, Divinylsulfon, Diallylphthalat, Triallylcyanurat, Triallylisocyanurat, 1,2-Polybutadien, N,N'-m-Phenylendimaleimid, Triallyltrimellitat. Bevorzugt werden eingesetzt die Acrylate und Methacrylate polyfunktioneller Alkohole. Bevorzugte polyfunktionelle Alkohole sind Ethylenglykol, Butandiol, Hexandiol, Polyethylenoxiddiol, Trimethylolpropan, Tetramethylolmethan und weitere in DE-AS 1.720.107, US-3.714.296 und US-3.849.519 genannte Verbindungen. Es ist auch eine Vernetzung der Latexteilchen im Anschluß an die Polymerisation möglich. Beispiele hierfür sind die in DE-AS 1 229 716, US-3.147.318 und DE-AS 1 247 666 genannten Maßnahmen. Die Menge an Comonomer bzw. die anderen

Maßnahmen sollen zu einem Gelgehalt des vernetzten Latex von 40 % bis 100 %, bevorzugt von 60 % bis 99 % und zu einem Quellungsindex der Gelkomponente von 5 bis 90, vorzugsweise von 10 bis 60 führen. Gelgehalt und Quellungsindex werden in Toluol nach der weiter unten beschriebenen Methode bestimmt.

Schwefel wird vorzugsweise in Mengen von 0,05 bis 2,0 Gew.-%, bezogen auf Monomere, insbesondere 0,1 bis 0,7 Gew.-% eingesetzt, bevorzugt als wäßrige Dispersion.

Anstelle von Schwefel können auch übliche Schwefelspender in entsprechender Menge eingesetzt werden.

Geeignete Peroxo-Aktivatoren sind z.B. Persulfate, Perborate, Percarbonate, Perphosphate und $H_2O_2$, vorzugsweise wasserlösliche Salze der Peroxodischwefelsäure. Die Aktivatoren werden vorzugsweise in einer molaren Menge, die 0,03 bis 3,0 Gew.-%, insbesondere 0,1 bis 1,0 Gew.-%, bezogen auf Monomere, Kaliumperoxodisulfat entspricht, eingesetzt.

Vorzugsweise werden von der Gesamtmenge an Peroxoaktivator 5 bis 30 % bei Polymerisationsbeginn zugegeben und die restlichen 70 bis 95 % während der Polymerisation entweder portionsweise oder kontinuierlich zudosiert.

Vorzugsweise wird zusätzlich Natrium-anthrachinon-2-sulfonat in einer Menge von 0,005 bis 0,1 Gew.-%, bezogen auf Monomere, eingesetzt. Es wird als Lösung zusammen mit dem Peroxoaktivator zudosiert oder vorzugsweise im Polymerisationsansatz vor der Aktivierung quantitativ vorgelegt.

Die Polyermisation wird bei Temperaturen von -10 bis +70°C, vorzugsweise 0 bis 50°C durchgeführt.

Als Regler werden Xanthogendisulfide und vorzugsweise Mercaptane eingesetzt.

Geeignete Agentien zum Abstoppen der Polymerisation sind z.B. Brenzkatechin und vorzugsweise Diethylhydroxylamin, das in einer Menge von 0,05 bis 0,15 Gew.-%, bezogen auf Monomere, vorzugsweise in Form einer wäßrigen Lösung eingesetzt wird.

Zur Verbesserung der Lagerstabilität der Polymeren werden übliche Alterungsschutzmittel wie sterisch gehinderte Phenolderivate, Amine, Phosphite, Xanthogendisulfide oder Thiuramdisulfide eingesetzt. Bevorzugt sind Tetraalkylthiuramdisulfide, gegebenenfalls in Kombination mit Verbindungen der anderen Stoffklassen.

Die Zugabe erfolgt als wäßrige Dispersion, organische Lösung oder wäßrige Emulsion einer organischen Lösung zum Latex vor oder nach der Entfernung nicht umgesetzter Monomere.

Es werden bis zu 6 Gew.-% Tetraethylthiuramdisulfid (TETD) oder eine entsprechende molare Menge einer anderen Verbindung oder Verbindungsmischung eingesetzt.

Beispiele

a) Herstellung der Gelkomponenten

Die Herstellung der Gelkomponenten der Serien 1) bis 6) erfolgte nach folgender Grundrezeptur (batch-Versuche; Angabe in Gew.-Teilen).
Chloropren und Comonomer : 100
Entsalztes Wasser (Gesamtmenge) : 128 bis 133
Na-Salz der disproportionierten Abietinsäure : 3,5
Na-Salz des Kondensationsproduktes aus Naphthalinsulfonsäure und Formaldehyd : 0,7
KOH : 0,5
$K_2S_2O_8$ : 0,07 bis 0,50
Na-Salz der Anthrachinonsulfonsäure : 0,03
Schwefel : 0,5
Na-dibutyldithiocarbamat (DBDTC) : 0,13 bis 2,0
TETD : 1,0 bis 4,0

Bei den Versuchen der Serien 3) - 6) wurde zusätzlich Ethylenglykoldimethacrylat (EGDM) als Vernetzungsmittel eingesetzt. (Gesamtmonomermenge wiederum 100 Gew.-Teile).

Die batch-Versuche wurden in einem Rührreaktor durchgeführt. In diesem Gefäß wurde die wäßrige Phase bestehend aus 120 Gew.-Teilen Wasser, disproportionierter Abietinsäure, Na-Salz der methylenverbrückten Naphthalinsulfonsäure und KOH vorgelegt, mit Stickstoff gespült und auf die in den Tabellen angegebene Temperatur aufgeheizt. Dann wurde das (die) mit Stickstoff gespülte(n) Monomere zugegeben. Bei den Beispielen, in denen Vernetzer verwendet wurde, war dieser im Monomeren gelöst. Nach Einstellung der in den Tabellen angegebenen Temperatur wurde der Schwefel als 50 gew.-%ige wäßrige Dispersion und DBDTC als 30 gew.-%ige wäßrige Lösung zugesetzt. Die Schwefeldispersion hatte folgende Zusammensetzung:
50 Gew.-% Schwefel
49 Gew.-% Wasser
0,82 Gew.-% Dispergiermittel (Basis Celluloseether)
0,08 Gew.-% Zinkoxid
0,10 Gew.-% Magnesiumoxid

Dann wurde mit einer geringen Menge einer mit Stickstoff gespülten verdünnten wäßrigen $K_2S_2O_8$-Lösung initiiert und während des Versuches die Polymerisation durch Zudosierung dieser wäßrigen und

mit Stickstoff gespülten Persulfatlösung unterhalten. Die in der Grundrezeptur angegebene Wassermenge ergibt sich aus dem ursprünglichen Wassereinsatz und den zugesetzten wäßrigen Lösungen und Dispersionen der Chemikalien. In den Tabellen sind die zur Erzielung der angeführten Umsätze benötigten Persulfatmengen aufgeführt.

Der Umsatz wurde gravimetrisch verfolgt. Bei den batch-Versuchen wurde mit 0,03 Gew.-Teilen, bezogen auf Latex, einer wäßrigen 2,5 gew.%igen Lösung von Diethylhydroxylamin abgestoppt, und der Latex mit der in den Tabellen angegebenen Menge an Tetraethylthiuramdisulfid (TETD) versetzt. TETD wurde als 25 gew.-%ige toluolische Emulsion eingesetzt.

Der Latex wurde auf ca. 500 ppm Restchloropren (bezogen auf Latex) entgast.

Die kontinuierliche Herstellung der Gelkomponenten erfolgte in einer 5-Kesselkaskade. Die Verweilzeit in jedem einzelnen der fünf gleichgroßen Kessel betrug 0,5 Stunden. Monomer, wäßrige Phase und Aktivator wurden jeweils in drei separaten Strömen in den ersten Reaktor dosiert.

Die einzelnen Phasen waren folgendermaßen zusammengesetzt (Gew.-Teile):

<u>Monomerphase</u>

| | | |
|---|---|---|
| Chloropren | : | zusammen 100 |
| 2,3-Dichlorbutadien | : | |
| EGDM | : | |
| Phenothiazin | : | 0,01 |

<u>wäßrige Phase:</u>

| | | |
|---|---|---|
| Entsalztes Wasser | : | 102 |
| Na-Salz der disproportionierten Abietiensäure | : | 3,5 |
| KOH | : | 0,42 |
| Natriumsalz des Kondensationsproduktes von Naphthalinsulfonsäure und Formaldehyd | : | 0,7 |
| Natriumsalz der Anthrachinon-2-sulfonsäure | : | 0,06 |
| Schwefel | : | 0,5 |
| DBDTC | : | 0,13 - 1,0 |
| TETD | : | 1,0 - 2,0 |

<u>Aktivatorlösung</u>

| | | |
|---|---|---|
| Kaliumperoxodisulfat | : | 0,26 bis 0,36 dosiert als 1,2-gew.-%ige wäßrige Lösung |

Die Dosierung des Aktivators erfolgte separat in die Kessel 1 bis 4. Über die Persulfatmenge ließ sich die Verteilung des Umsatzes auf die einzelnen Kessel sowie der Endumsatz einstellen.

Für die Einstellung von verschiedenen Endumsätzen werden zwei Beispiele angegeben:
Versuch ohne Vernetzer (EGDM):

| Reaktor | $K_2S_2O_8$-Dosierung [Gew.-Teile] | Gesamtumsatz [%] |
|---|---|---|
| 1 | 0,08 | 54 |
| 2 | 0,07 | 80 |
| 3 | 0,06 | 92 |
| 4 | 0,05 | 95 |
| 5 | - | 95 |

Versuch mit Vernetzer (EGDM):

| Reaktor | $K_2S_2O_8$-Dosierung [Gew.-Teile] | Gesamtumsatz [%] |
|---|---|---|
| 1 | 0,15 | 42 |
| 2 | 0,09 | 69 |
| 3 | 0,08 | 83 |
| 4 | 0,04 | 90 |
| 5 | - | 90 |

In den 5. Kessel der Kaskade wurde TETD als 15 gew.-%ige chloroprenische Lösung eindosiert.

In einem separaten Rührkessel wurde die Polymerisation kontinuierlich mit 0,1 Gew.-Teilen Diethylhydroxylamin, dosiert als 2,5 gew.-%ige wäßrige Lösung, abgestoppt. Die Entgasung der kontinuierlich hergestellten Latices erfolgte analog den batch-Versuchen.

Die Gelkomponenten der Vergleichsserien 1) und 2) wurden nach DE-PS 17 20 107, DE-OS 31 20 792 und DE-OS 31 23 905 hergestellt.

Die Gelkomponente des Vergleichsbeispiels in Serie 8) wurde nach DE-OS 32 34 318, Beispiel 5 hergestellt.

b) Herstellung der Solkomponenten

Die Solkomponente der Serien 2) (Versuche a-d), 4), 5), 6) und 7) sowie der Vergleichsserien 1) und 2) wurde nach DE-OS 30 02 711 Beispiel 13 hergestellt. Die Herstellung der Solkomponente der Serie 2) (Versuche e-h) und Serie 8) (Beispiel 1) erfolgte nach DE-OS 23 06 610 (II. Polymerisationsbeispiel). Die Herstellung der Solkomponente des Vergleichsbeispiels in Serie 8) erfolgte nach DE-OS 32 34 318 Beispiel 2.

c) Herstellung und Aufarbeitung der Sol-Gel-Mischungen

Der entgaste Latex des Polychloropren-Gels wurde mit dem entgasten Latex des Polychloropren-Sols in den angegebenen Verhältnissen (s. Tabellen) gemischt. Das Latexgemisch wurde mit 20 gew.-%iger Essigsäure auf pH 6,5 gestellt, das Polymere durch Gefrierkoagulation isoliert, mit Wasser gewaschen, die Felle mit einer Quetschwalze auf ca. 30 Gew.-% Restfeuchte entwässert und im Umluftschrank bei 70°C bis zu einer Restfeuchte < 0,5 Gew.-% getrocknet.

d) Charakterisierung des Rohkautschuks

Am Rohkautschuk wurden folgende Bestimmungen durchgeführt:
Gelgehalt in Toluol: 100 bis 150 mg des Polymeren wurden 12 - 16 Stunden in 20 cm Toluol stehengelassen und da nach 2 Stunden geschüttelt. Nach Abzentrifugieren des unlöslichen Anteils wurde dieser getrocknet, ausgewogen und in Prozent der Polymereinwaage angegeben.
Der Quellungsindex ($Q_i$) des Gelanteils wurde aus dem Gehalt des im Gel (bei einer Zentrifugation mit 500.000 m/sec$^2$) verbleibenden Toluols ($m_T$) und dem Trockengewichts des Gels ($m_{Gel}$) berechnet:

$$Q_i = \frac{m_T}{m_{Gel}} .$$

Die Mooney-Viskosität (ML 1+4) wurde nach DIN 53 523 Teil 1-3 bei 100°C bestimmt.
Die Verarbeitbarkeit wurde auf der Basis folgender Mischungen geprüft:

Mischung 1:

100,0 Gew.-Teile Polymer
60,0 Gew.-Teile Ruß (N 990)
10,0 Gew.-Teile Natrium-Aluminium-Silikat
5,0 Gew.-Teile arom. Mineralöl
2,0 Gew.-Teile Phenyl-α-naphtylamin
1,0 Gew.-Teile Stearinsäure
4,0 Gew.-Teile Magnesiumoxid

Mischung 2:

100,0 Gew.-Teile Polymer
50,0 Gew.-Teile Ruß (N 990)
50,0 Gew.-Teile Ruß (N 539)
30,0 Gew.-Teile arom. Mineralöl
2,0 Gew.-Teile Phenyl-α-naphthylamin
1,0 Gew.-Teile Stearinsäure
1,0 Gew.-Teile paraff. Ozonschutzwachs
4,0 Gew.-Teile Magnesiumoxid

Mischung 3:

100,0 Gew.-Teile Polymer
25,0 Gew.-Teile Ruß (N 990)
25,0 Gew.-Teile Ruß (N 539)
15,0 Gew.-Teile arom. Mineralöl
2,0 Gew.-Teile Phenyl-α-naphthylamin
1,0 Gew.-Teile Stearinsäure
1,0 Gew.-Teile paraff. Ozonschutzwachs
4,0 Gew.-Teile Magnesiumoxid

Mischung 4:

100,0 Gew.-Teile Polymer
10,0 Gew.-Teile Kreide
1,0 Gew.-Teile paraff. Mineralöl
2,0 Gew.-Teile Gemisch alkylierter Phenole
0,5 Gew.-Teile Stearinsäure
4,0 Gew.-Teile Magnesiumoxid

Die Verarbeitbarkeit wurde mittels folgender Prüfmethoden getestet:

Mischungen 1 bis 3

Es wird ein Mischungsansatz von 1,2 kg in einem 1-Liter-Kneter bei 30°C und 30 Upm gemischt. 200 g der Mischung werden mittels eines Brabender-Laborextruders (10-D-Schnecke) bei Temperaturen von 60 (Zylinder) bis 70°C (Spritzkopf) durch eine 4,2 mm Düse zu einer Rundschnur verspritzt und daran die Spritzquellung (in %) bestimmt.

Mischung 4

Es wird ein Mischungsansatz von 1,2 kg in einem 1-Liter-Kneter bei 30°C und 30 Upm gemischt. 300 g dieser Testmischung werden als 8 mm breites und 2 mm dickes Band mittels eines Brabender-Labroextruders (10-D-Schnecke) bei Temperaturen von 70 (Zylinder) bis 90°C (Spritzkopf) zu einem Garvey-Profil nach ASTM-D 2230-78 verspritzt und daran die Spritzquellung (in %) bestimmt.

Mischungen 1 bis 4

500 g der Testmischung werden auf einem Walzwerk (320 x 200 mm) bei 30°C, 20 Upm und einem Walzenspalt von 0,9 mm als Fell umlaufen gelassen. Aus dem Fell werden 2 Streifen von 5 x 50 cm herausgeschnitten und auf einer kleinen talkumierten Unterlage sich selbst überlassen.
Nach 24 h wird die Länge gemessen und das Mittel aus beiden Proben als Relaxation (in %) angegeben.

e) Vulkanisations- und Vulkanisatprüfungen

Die Vulkanisationen wurden auf der Basis von zwei Mischungen durchgeführt :

Mischung 5 (Iso-Mischung 2475):

100,0 Gew.-Teile Polymer
30,0 Gew.-Teile Ruß (N 762)
0,5 Gew.-Teile Stearinsäure
2,0 Gew.-Teile Phenyl-β-naphthylamin
4,0 Gew.-Teile Magnesiumoxid
5,0 Gew.-Teile Zinkoxid aktiv
0,5 Gew.-Teile Ethylenthioharnstoff

Mischung 6 (DIN 53670, Teil 5):

100,0 Gew.-Teile Polymer
30,0 Gew.-Teile Ruß (N 762)
0,5 Gew.-Teile Stearinsäure
4,0 Gew.-Teile Magnesiumoxid
5,0 Gew.-Teile Zinkoxid aktiv
0,5 Gew.-Teile Ethylenthioharnstoff

Der Mooneyscorch (MS) wurde bei einer Temperatur von 120°C nach DIN 53523 Teil 4 bestimmt.
Am Vulkanisat erfolgte die Bestimmung von Zugfestigkeit, Bruchdehnung und Modul bei 300 % Dehnung nach einer Vulkanisationszeit von 30 Minuten nach DIN 53504.
Die Weiterreißfestigkeit wurde am Normring R 2 nach DIN 53504 bestimmt. Dazu wurde der Ring auf der Innenseite mit 2x5 nebeneinanderliegenden 1 mm tiefen Einschnitten, versehen. Der Abstand der Einschnitte betrug 2 mm. Die beiden Gruppen von 5 Einschnitten lagen einander gegenüber.
Die eingeschnittenen Ringe wurden auf Rollen mit den Abmessungen für den Normring R 2, man vgl. DIN 53504, Tabelle 3, gelegt und mit einer Vorschubgeschwindigkeit von 700 mm/min in einer Zugfestigkeitsmaschine auf Zug bis zum Bruch beansprucht.
Der Weiterreißwiderstand W oder die Strukturfestigkeit wird nach folgender Gleichung auf die Solldicke von $d_0$ = 4 mm umgerechnet und in N angegeben:

$$W = W_{gem} \cdot \frac{d}{d_o}$$

wobei
W [N] = gesuchter Weiterreißwiderstand
$W_{gem}$ [N] = gemessener Weiterreißwiderstand
$d_0$ [mm] = Solldicke
d [mm] = gemessene Dicke
Aus den Meßwerten von 3 oder 6 Proben wird der Mittelwert errechnet und der zugehörige Vertrauensbereich für eine 95 %ige Sicherheit, man vgl. DIN 53598.

f) Erfindungsgemäße Beispiele und Ergebnisse

Serie 1) In dieser Serie wird die Herstellung von schwefelmodifiziertem Polychloroprengel ohne Vernetzer beschrieben. Der Gelgehalt des Polymeren und der Quellungsindex des Gelanteils wird durch den Umsatz und die Menge an Dibutyldithiocarbamat bestimmt. Die Herstellung kann diskontinuierlich und kontinuierlich erfolgen.

Serie 2) Mit den in dieser Serie zusammengefaßten Versuchen wird gezeigt, daß die erfindungsgemäß hergestellten Polychloroprenmischungen in der Kombination der Vulkanisateigenschaften (hohe Zugfestigkeit, hoher Modul, hohe Weiterreißfestigkeit bei guter Oberflächenbeschaffenheit der Extrudate) ein hohes Niveau erreichen.

<u>Serie 1):</u> Herstellung S-modifizierter Gele in Gegenwart von Dibutyldithiocarbamat (DBDTC) ohne Vernetzer

| batch | Konti | Schwefel | DBDTC | Temperatur [°C] | Umsatz [%] | $K_2S_2O_8$ | TETD-Nachsatz | ML 1+4 [ME] | Gel-gehalt [%] | Quellungs-index |
|---|---|---|---|---|---|---|---|---|---|---|
| x | - | 0,5 | 0,25 | 45 | 91 | 0,28 | 1,0 | 118 | 64 | 45 |
| x | - | 0,5 | 0,25 | 45 | 97 | 0,32 | 1,0 | 80 | 69 | 40 |
| x | - | 0,5 | 0,13 | 45 | 98 | 0,29 | 1,0 | 110 | 95 | 38 |
| - | x | 0,5 | 0,13 | 45 | 95 | 0,36 | 1,0 | 115 | 90 | 36 |

<u>Serie 2):</u> Herstellbedingungen von Gelen (I bis II), die durch Einsatz von Dibutyldithiocarbamat ohne Vernetzer hergestellt, und mit Solpolymeren gemischt (Mischungen a bis m) anwendungstechnisch geprüft wurden

| Ver-such | diskonti | Konti | Schwefel | DBDTC | Monomer | | Temp. [°C] | TETD-Nachsatz | Umsatz [%] | $K_2S_2O_8$ | Gel-gehalt [Gew.-%] | Quel-lungs-index |
|---|---|---|---|---|---|---|---|---|---|---|---|---|
| | | | | | Chloro-pren | Dichlor-butadien | | | | | | |
| I | x | - | 0,5 | 0,13 | 98,8 | 1,2 | 45 | 3,0 | 93 | 0,49 | 95 | 25 |
| II | x | - | 0,5 | 0,13 | 98,8 | 1,2 | 45 | 2,0 | 93 | 0,50 | 84 | 45 |

Serie 2): Anwendungstechnische Daten der Sol/Gel-Abmischungen, bei denen die Gele I, II und III verwendet werden

| Versuch | Gel-Typ | Sol-Typ | Abmischungs-Verhältnis Sol : Gel | ML 1+4 [ME] | Prüfmischung | $MS_5$ [Min] | Zugfestigkeit [mPa] | Bruchdehnung [%] | M bei 300 % Dehnung [mPa] | Weiterreißfestigkeit [N] |
|---|---|---|---|---|---|---|---|---|---|---|
| a | I | Mercaptan | 100 : 0 | 50 | 5 | 10 | 18,4 | 410 | 13,1 | 161 |
| b | I | geregelt | 90 : 10 | 62 | 5 | 13 | 18,9 | 430 | 12,6 | 166 |
| c | I | " | 80 : 20 | 78 | 5 | 13 | 19,4 | 440 | 12,4 | 200 |
| d | I | " | 70 : 30 | 91 | 5 | 12 | 20,1 | 470 | 12,0 | 206 |
| e | II | Xanthogen- | 100 : 0 | 43 | 5 | - | 19,7 | 440 | 12,4 | 157 |
| f | II | disulfid | 90 : 10 | 53 | 5 | - | 20,4 | 440 | 13,0 | 180 |
| g | II | geregelt | 80 : 20 | 63 | 5 | - | 20,4 | 440 | 13,0 | 179 |
| h | II | " | 70 : 30 | 75 | 5 | - | 19,7 | 440 | 12,9 | 165 |

| Versuch | Prüfmischung | Relaxation [%] | Spritzquellung [%] | Oberflächenbeschaffenheit |
|---|---|---|---|---|
| b | 1 | 60 | 44 | 1 |
| c | 1 | 60 | 37 | 2 |
| d | 2 | 30 | 30 | 2 |
| f | 3 | 69 | 49 | 2 |
| g | 3 | 68 | 45 | 2 |
| h | 3 | 71 | 42 | 3 |

Serie 3) In dieser Serie wird die Herstellung schwefelmodifizierten Gels durch Einsatz von DBDTC in Gegenwart von EGDM beschrieben. Die Herstellung kann diskontinuierlich oder kontinuierlich erfolgen. Gelgehalt und Quellungsindex können gezielt eingestellt werden.

Die Polymerisationstemperatur zeigt im gewählten Bereich keinen größeren Einfluß auf Mooney-Viskosität, Gelgehalt und Quellungsindex des schwefelmodifizierten Gels.

Serie 4) In dieser Serie wird die Vernetzermenge (EGDM) variiert. Die Ergebnisse über das reine schwefelmodifizierte Gel zeigen, daß Mooney-Viskosität, Gelgehalt und Quellungsindex mit Hilfe der Vernetzermenge gezielt eingestellt werden können. Mooney-Viskosität und Gelgehalt nehmen mit steigender Vernetzermenge zu, während der Quellungsindex abnimmt.

Die mit dem erfindungsgemäß hergestellten Gelpolymer hergestellten Sol/Gel-Abmischungen zeigen im Vergleich mit Sol/Gel-blends, die nach dem Stand der Technik hergestellt wurden (Vergleichsserie 1), höhere Zugfestigkeiten, die im Gegensatz zur Vergleichsserie 1 mit zunehmenden Anteilen an Gelpolymer nicht abnehmen. Außerdem zeigen die erfindungsgemäß hergestellten Mischungen im Vulkanisat höhere Weiterreißfestigkeiten als die Beispiele der Vergleichsserie.

Serie 5) In dieser Serie wird die Menge an DBDTC variiert. Die Ergebnisse des reinen schwefelmodifizierten Gelpolymeren zeigen, daß mit Hilfe der DBDTC-Menge Mooney-Viskosität, Gelgehalt und Quellungsindex des Gels variiert werden können. Mit zunehmender DBDTC-Menge nimmt die Mooney-Viskosität und der Gelgehalt der Gelpolymeren ab, während der Quellungsindex des Gels zunimmt.

Die mit dem erfindungsgemäß hergestellten Gelpolymer hergestellten Sol/Gel-Abmischungen zeigen im Vergleich zur Vergleichsserie 2 deutlich höhere Zugfestigkeiten des Vulkanisates, die im Gegensatz zur Vergleichsserie nicht mit zunehmendem Anteil an Gelpolymer in der Polymermischung abnehmen. Die Weiterreißfestigkeiten liegen ebenfalls deutlich höher als bei der Vergleichsserie 2.

Serie 6) In diesem Beispiel wird ein Gel bei höherer Temperatur hergestellt. Die Daten des reinen Gelpolymeren und die der daraus hergestellten Sol/Gel-Abmischungen zeigen ein dem Versuch II entsprechendes Wertebild.

Serie 7) In diesem Beispiel wird das Gel kontinuierlich hergestellt. Die Daten des reinen Gelpolymeren und der daraus hergestellten Sol/Gel-Abmischungen entsprechen dem Wertebild der diskontinuierlich hergestellten Gelpolymeren.

Die mit dem erfindungsgemäß hergestellten Gelpolymer hergestellten Sol/Gel-Abmischungen weisen auch bei kontinuierlich Herstellung des Gelpolymeren hohe Zugfestigkeiten und Weiterreißfestigkeiten auf.

Serie 8) In dieser Serie werden die Daten von erfindungsgemäß hergestellten Sol/Gel-Polymermischungen mit einer Sol/Gel-Polymermischung, bei der sowohl die Sol- als auch die Gelkomponente elementaren Schwefel enthält (nach DE-OS 3 234 318), verglichen.

Die erfindungsgemäß hergestellten Polymermischungen zeigen bei hoher Zugfestigkeit einen hohen Modul der Vulkanisate sowie eine gute Oberflächenbeschaffenheit der Extrudate. Diese Kombination von Eigenschaften lassen sich nicht durch Polymermischungen nach DE-OS 3 234 318 erreichen.

Serie 3): Herstellung S-modifizierter Gele in Gegenwart von DBDTC und EGDM

| diskont. | konti | Schwefel | DBDTC | EGDM | Temperatur [°C] | $K_2S_2O_8$ | Umsatz [%] | TETD-Nachsatz | ML 1+4 [ME] | Gelgehalt [Gew.-%] | Quellungsindex |
|---|---|---|---|---|---|---|---|---|---|---|---|
| x | - | 0,5 | 1,0 | 5,0 | 45 | 0,16 | 82 | 2,0 | 118 | 84 | 14 |
| x | - | 0,5 | 1,0 | 5,0 | 30 | 0,12 | 83 | 2,0 | 120 | 87 | 14 |
| x | - | 0,5 | 1,0 | 5,0 | 30 | 0,07 | 78 | 2,0 | 118 | 86 | 15 |
| - | x | 0,5 | 1,0 | 5,0 | 45 | 0,26 | 80 | 2,0 | 107 | 85 | 11 |
| - | x | 0,5 | 1,0 | 2,0 | 30 | 0,36 | 91 | 2,0 | 118 | 82 | 12 |
| - | x | 0,5 | 1,0 | 4,0 | 30 | 0,36 | 90 | 2,0 | 94 | 88 | 10 |

Serie 4:) Herstellbedingungen von Gelen (I bis III), bei denen die Vernetzermenge variiert wurde und die mit Solpolymeren gemischt (Mischungen a bis n) anwendungstechnisch geprüft wurden

| Versuch | diskont. | konti | Schwefel | DBDTC | EGDM | Temperatur [°C] | $K_2S_2O_8$ | Umsatz [%] | TGETD-Nachsatz | ML 1+4 [ME] | Gelgehalt in Toluol [%] | Quellungsindex |
|---|---|---|---|---|---|---|---|---|---|---|---|---|
| I | x | - | 0,5 | 1,0 | 2,5 | 30 | 0,11 | 80 | 3,0 | 104 | 72 | 25 |
| II | x | - | 0,5 | 1,0 | 5,0 | 30 | 0,14 | 80 | 3,0 | 108 | 84 | 16 |
| III | x | - | 0,5 | 1,0 | 7,5 | 30 | 0,14 | 80 | 3,0 | 109 | 86 | 13 |

<u>Serie 5):</u> Herstellbedingungen von Gelen IV bis VI, bei denen die Peptisationsmittelmenge varriert wurde und die mit Solpolymeren gemischt (Mischungen a bis n) anwendungstechnisch geprüft wurden

| Versuch | diskont. | konti | Schwefel | DBDTC | EGDM | Temperatur [°C] | $K_2S_2O_8$ | Umsatz [%] | TETD-Nachsatz | ML 1+4 [ME] | Gelgehalt [%] | Quellungsindex |
|---|---|---|---|---|---|---|---|---|---|---|---|---|
| IV | x | - | 0,5 | 0,5 | 5,0 | 30 | 0,12 | 80 | 1,0 | 132 | 86 | 12 |
| V | x | - | 0,5 | 1,5 | 5,0 | 30 | 0,24 | 80 | 3,0 | 110 | 84 | 13 |
| VI | x | - | 0,5 | 2,0 | 5,0 | 30 | 0,23 | 80 | 4,0 | 79 | 82 | 14 |

<u>Serie 6):</u> Herstellbedingungen eines Geles (VII), das bei höherer Temperatur hergestellt wurde als das sonst gleichhergestellte Gel II und das mit Solpolymer gemischt (Mischungen a bis d) anwendungstechnisch geprüft wurde

| Versuch | diskont. | konti | Schwefel | DBDTC | EGDM | Temperatur [°C] | $K_2S_2O_8$ | Umsatz [%] | TETD-Nachsatz | ML 1+4 [ME] | Gelgehalt [%] | Quellungsindex |
|---|---|---|---|---|---|---|---|---|---|---|---|---|
| VII | x | - | 0,5 | 1,0 | 5,0 | 45 | 0,17 | 80 | 3,0 | 111 | 82 | 17 |

Serie 7): Herstellbedingungen eines Gels (VIII), das in kontinuierlicher Fahrweise hergestellt wurde und das mit Solpolymer gemischt (Mischungen a bis c) anwendungstechnisch geprüft wurde

| Versuch | diskont. | konti | Schwefel | DBDTC | EGDM | Temperatur [°C] | $K_2S_2O_8$ | Umsatz [%] | TETD-Nachsatz | ML 1+4 [ME] | Gelgehalt in Toluol [%] | Quellungsindex |
|---|---|---|---|---|---|---|---|---|---|---|---|---|
| VIII | - | x | 0,5 | 1,0 | 3,0 | 30 | 0,36 | 90 | 2,0 | 85 | 89 | 13 |

<u>Serie 4):</u> Anwendungstechnische Daten der Sol/Gel-Abmischungen bei denen die Gele I, II und III verwendet wurden

| Versuch | Gel-Typ | Sol-Typ | Abmischungs-Verhältnis Sol | : | Gel | ML 1+4 [ME] | Prüf-mischung | $MS_5$ [Min] | Zugfestigkeit [mPa] | Bruchdehnung [%] | M bei 300 % Dehnung [mPa] | Weiterreißfestigkeit [N] |
|---|---|---|---|---|---|---|---|---|---|---|---|---|
| a | I | Mercaptan- | 100 | : | 0 | 43 | 6 | 12 | 17,6 | 370 | 14,7 | 175 |
| b | I | geregelt | 85 | : | 15 | 50 | 6 | 14 | 17,4 | 380 | 14,0 | 148 |
| c | I | " | 75 | : | 25 | 54 | 6 | 13 | 19,6 | 420 | 13,8 | 213 |
| d | I | " | 50 | : | 50 | 73 | 6 | 12 | 19,1 | 410 | 14,2 | 152 |
| e | I | " | 25 | : | 75 | 91 | 6 | 9 | 18,3 | 370 | 15,6 | 145 |
| f | II | Mercaptan- | 85 | : | 15 | 50 | 6 | 12 | 18,5 | 400 | 13,7 | 154 |
| g | II | geregelt | 75 | : | 25 | 51 | 6 | 10 | 18,8 | 420 | 13,2 | 180 |
| h | II | " | 50 | : | 50 | 66 | 6 | 9 | 18,5 | 420 | 14,2 | 169 |
| i | II | " | 25 | : | 75 | 91 | 6 | 8 | 16,7 | 360 | 14,7 | 142 |
| k | III | Mercaptan- | 85 | : | 15 | 48 | 6 | - | 16,2 | 360 | 14,0 | 148 |
| l | III | geregelt | 75 | : | 25 | 52 | 6 | 14 | 18,0 | 400 | 13,4 | 171 |
| m | III | " | 50 | : | 50 | 59 | 6 | - | 15,6 | 360 | 13,9 | 157 |
| n | III | " | 25 | : | 75 | 74 | 6 | - | 13,7 | 300 | - | 123 |

<u>Serie 4)</u>: (Fortsetzung)

Anwendungstechnische Daten der Sol/Gel-Abmischungen bei denen die Gele I, II und III verwendet wurden

| Versuch | Prüfmischung | Relaxation [%] | Spritzquellung [%] |
|---|---|---|---|
| b | 4 | 80 | 41 |
| c | 4 | 80 | 39 |
| d | 4 | 78 | 38 |
| e | 4 | 75 | 34 |
| f | 4 | 78 | 44 |
| g | 4 | 78 | 42 |
| h | 4 | 72 | 34 |
| i | 4 | 58 | 25 |
| k | 4 | 79 | 40 |
| l | 4 | 77 | 42 |
| m | 4 | 68 | 37 |
| n | 4 | 52 | 21 |

<u>Serie 5):</u> **Anwendungstechnische Daten der Sol/Gel-Abmischungen, bei denen die Gele IV, V und VI verwendet wurden**

| Versuch | Gel-Typ | Sol-Typ | Abmischungs-Verhältnis Sol : Gel | ML 1+4 [ME] | Prüf-mischung | $MS_5$ [Min] | Zugfestigkeit [mPa] | Bruchdehnung [%] | M bei 300 % Dehnung [mPa] | Weiterreißfestigkeit [N] |
|---|---|---|---|---|---|---|---|---|---|---|
| a | IV | Mercaptan- | 100 : 0 | 42 | 6 | 12 | 17,3 | 370 | 14,4 | 169 |
| b | IV | geregelt | 85 : 15 | 52 | 6 | 12 | 18,0 | 390 | 14,0 | 186 |
| c | IV | " | 75 : 25 | 56 | 6 | 10 | 18,4 | 380 | 14,8 | 174 |
| d | IV | " | 50 : 50 | 72 | 6 | 7 | 18,4 | 360 | 16,6 | 184 |
| e | IV | " | 25 : 75 | 104 | 6 | 6 | 17,1 | 330 | - | 147 |
| f | V | Mercaptan- | 85 : 15 | 47 | 6 | 13 | 18,9 | 390 | 13,8 | 172 |
| g | V | geregelt | 75 : 25 | 51 | 6 | 14 | 19,0 | 410 | 13,9 | 192 |
| h | V | " | 50 : 50 | 63 | 6 | 14 | 17,2 | 400 | 13,4 | 169 |
| i | V | " | 25 : 75 | 79 | 6 | 11 | 17,4 | 370 | 14,9 | 172 |
| k | VI | Mercaptan- | 85 : 15 | 48 | 6 | 15 | 18,3 | 390 | 14,0 | 169 |
| l | VI | geregelt | 75 : 25 | 51 | 6 | 12 | 18,8 | 420 | 13,2 | 204 |
| m | VI | " | 50 : 50 | 58 | 6 | 12 | 17,4 | 420 | 12,6 | 180 |
| n | VI | " | 25 : 75 | 71 | 6 | 12 | 15,5 | 370 | 13,7 | 137 |

Serie 5): (Fortsetzung)
Anwendungstechnische Daten der Sol/Gel-Abmischungen, bei denen die Gele IV, V und VI verwendet werden

| Versuch | Prüfmischung | Relaxation [%] | Spritzquellung [%] |
|---|---|---|---|
| b | 4 | 79 | 41 |
| c | 4 | 78 | 38 |
| d | 4 | 72 | 33 |
| e | 4 | 62 | 22 |
| f | 4 | 81 | 44 |
| g | 4 | 80 | 42 |
| h | 4 | 72 | 34 |
| i | 4 | 66 | 28 |
| k | 4 | 80 | 46 |
| l | 4 | 77 | 42 |
| m | 4 | 69 | 39 |
| n | 4 | 53 | 25 |

<u>Serie 6):</u> **Anwendungstechnische Daten der Sol/Gel-Abmischungen bei denen das Gel VII verwendet wurde**

| Versuch | Gel-Typ | Sol-Typ | Abmischungs-Verhältnis Sol : Gel | ML 1+4 [ME] | Prüfmischung | $MS_5$ [Min] | Zugfestigkeit [mPa] | Bruchdehnung [%] | M bei 300 % Dehnung [mPa] | Weiterreißfestigkeit [N] |
|---|---|---|---|---|---|---|---|---|---|---|
| a | VII | Mercaptan- | 85 : 15 | 49 | 6 | 11 | 18,0 | 390 | 13,8 | 170 |
| b | VII | geregelt | 75 : 25 | 54 | 6 | 11 | 17,9 | 390 | 13,7 | 177 |
| c | VII | " | 50 : 50 | 70 | 6 | 8 | 18,2 | 400 | 14,0 | 163 |
| d | VII | " | 25 : 75 | 93 | 6 | 8 | 16,6 | 350 | 13,9 | 144 |

| Versuch | Prüfmischung | Relaxation [%] | Spritzquellung [%] |
|---|---|---|---|
| a | 4 | 80 | 45 |
| b | 4 | 78 | 43 |
| c | 4 | 70 | 36 |
| d | 4 | 59 | 25 |

<u>Serie 7):</u> Anwendungstechnische Daten der Sol/Gel-Abmischungen bei denen das Gel VIII verwendet wurde

| Versuch | Gel-Typ | Sol-Typ | Abmischungs-Verhältnis Sol : Gel | ML 1+4 [ME] | Prüfmischung | Zugfestigkeit [MPa] | Bruchdehnung [%] | M bei 300 % Dehnung [MPa] | Weiterreißfestigkeit [N] |
|---|---|---|---|---|---|---|---|---|---|
| a | VIII | Mercaptan- | 100 : 0 | 45 | 5 | 19,1 | 440 | 12,3 | 160 |
| b | VIII | geregelt | 75 : 25 | 57 | 5 | 20,2 | 480 | 11,5 | 187 |
| c | VIII | " | 50 : 50 | 67 | 5 | 17,6 | 420 | 12,6 | 168 |

| Versuch | Prüfmischung | Relaxation [%] | Spritzquellung [%] |
|---|---|---|---|
| a | 3 | 61 | 41 |
| b | 3 | 50 | 26 |

<u>Vergleichsserie 1):</u> Herstellbedingungen von n-DDM-geregelten und EGDM-vernetzten Gelen (I bis III) bei denen die Vernetzermenge variiert wurde und die mit Solpolymeren gemischt (Mischungen a bis h) anwendungstechnisch geprüft wurden

| Versuch | diskonti. | konti | EGDM | n-DDM | Temperatur [°C] | Umsatz [%] | Gelgehalt in Toluol [%] |
|---|---|---|---|---|---|---|---|
| I | x | - | 2,5 | 0,30 | 44 | 80 | 70 |
| II | x | - | 5,0 | 0,30 | 44 | 80 | 83 |
| III | x | - | 7,5 | 0,30 | 44 | 80 | 92 |

<u>Vergleichsserie 2):</u> Herstellbedingungen von n-DDm-geregelten und EGDM-vernetzen Gelen (IV bis VI) bei denen die Reglermenge variiert wurde und die mit Solpolymeren gemischt (Mischungen a bis k) anwendungstechnisch geprüft wurden

| Versuch | diskonti. | konti | EGDM | n-DDM | Temperatur [°C] | Umsatz [%] | Gelgehalt in Toluol [%] |
|---|---|---|---|---|---|---|---|
| IV | x | - | 5,0 | 0,20 | 44 | 80 | 89 |
| V | x | - | 5,0 | 0,35 | 44 | 80 | 81 |
| VI | x | - | 5,0 | 0,40 | 44 | 80 | 82 |

**Vergleichsserie 1):** Anwendungstechnische Daten der Sol/Gel-Abmischungen bei denen die Gele I, II und III verwendet wurden

| Versuch | Gel-Typ | Sol-Typ | Abmischungs-Verhältnis Sol | : | Gel | ML 1+4 [ME] | Prüfmischung | $MS_5$ [Min] | Zugfestigkeit [mPa] | Bruchdehnung [%] | M bei 300 % Dehnung | Weiterreißfestigkeit [N] |
|---|---|---|---|---|---|---|---|---|---|---|---|---|
| a | I | Mercaptan- | 100 | : | 0 | 39 | 6 | 11 | 16,2 | 340 | - | 131 |
| b | I | geregelt | 75 | : | 25 | 57 | 6 | 11 | 16,0 | 320 | - | 151 |
| c | I | " | 50 | : | 50 | 78 | 6 | 8 | 14,5 | 270 | - | 137 |
| d | I | " | 25 | : | 75 | 95 | 6 | 6 | 13,7 | 240 | - | 119 |
| e | II | Mercaptan- | 75 | : | 25 | 52 | 6 | 11 | 14,9 | 310 | - | 132 |
| f | II | geregelt | 50 | : | 50 | 65 | 6 | 8 | 13,0 | 270 | - | 128 |
| g | II | " | 25 | : | 75 | 85 | 6 | 4 | 14,5 | 250 | - | 121 |
| h | III | Mercaptan- | 75 | : | 25 | 51 | 6 | 12 | 16,0 | 330 | - | 115 |
| i | III | geregelt | 50 | : | 50 | 68 | 6 | 8 | 10,2 | 230 | - | 112 |
| k | III | " | 25 | : | 75 | 87 | 6 | 7 | 10,4 | 210 | - | 95 |

| Versuch | Prüfmischung | Relaxation [%] | Spritzquellung [%] |
|---|---|---|---|
| b | 4 | › 80 | 39 |
| c | 4 | 80 | 35 |
| d | 4 | 76 | 33 |
| e | 4 | 80 | 46 |
| f | 4 | 70 | 35 |
| g | 4 | 66 | 24 |
| h | 4 | 78 | 47 |
| i | 4 | 66 | 32 |
| k | 4 | 60 | 22 |

**Vergleichsserie 2):** Anwendungstechnische Daten der Sol/Gel-Abmischungen bei denen die Gele IV, V und VI verwendet wurden

| Versuch | Gel-Typ | Sol-Typ | Abmischungs-Verhältnis Sol : Gel | ML 1+4 [ME] | Prüf-mi-schung | $MS_5$ [Min] | Zugfe-stig-keit [mPa] | Bruch-dehnung [%] | M bei 300 % Deh-nung [mPa] | Weiter-reiß-festig-keit [N] |
|---|---|---|---|---|---|---|---|---|---|---|
| a | IV | Mercaptan- | 100 : 0 | 39 | 6 | 11 | 16,2 | 340 | - | 131 |
| b | IV | geregelt | 75 : 25 | 57 | 6 | 12 | 15,6 | 320 | - | 132 |
| c | IV | " | 50 : 50 | 82 | 6 | 4 | 14,2 | 270 | - | 131 |
| d | IV | " | 25 : 75 | 121 | 6 | 3 | 12,0 | 180 | - | 137 |
| e | V | Mercaptan- | 75 : 25 | 55 | 6 | 11 | 15,1 | 300 | - | 139 |
| f | V | geregelt | 50 : 50 | 68 | 6 | 8 | 15,7 | 300 | - | 126 |
| g | V | " | 25 : 75 | 94 | 6 | 4 | 13,7 | 230 | - | 114 |
| h | VI | Mercaptan- | 75 : 25 | 51 | 6 | 11 | 16,3 | 330 | - | 144 |
| i | VI | geregelt | 50 : 50 | 63 | 6 | 9 | 14,5 | 290 | - | 119 |
| k | VI | " | 25 : 75 | 79 | 6 | 7 | 11,8 | 240 | - | 116 |

| Versuch | Prüfmischung | Relaxation [%] | Spritzquellung [%] |
|---|---|---|---|
| b | 4 | 80 | 41 |
| c | 4 | 72 | 27 |
| d | 4 | 66 | 17 |
| e | 4 | > 80 | 43 |
| f | 4 | 74 | 37 |
| g | 4 | 67 | 25 |
| h | 4 | > 80 | 45 |
| i | 4 | 73 | 38 |
| k | 4 | 65 | 29 |

**Serie 8):** Vergleich der erfindungsgemäßen Sol/Gel-Mischungen mit denen aus DE-OS 3 234 318 (Vergleichsbeispiel)

Herstellungsbedingungen der Gel- und Solkomponenten

| Beispiel | Gel-Komponente | | | | | Sol-komponente | | | TETD der Sol/Gel-Mischung |
|---|---|---|---|---|---|---|---|---|---|
| | Schwefel | DBDTC | EGDM | Umsatz | TETD | Schwefel | TETD | Umsatz | |
| 1 | 0,5 | 0,13 | - | 93 | 2,0 | - | - | 65 | 0,2<br>0,4<br>0,6 |
| | entspricht Versuch II in Serie 2) | | | | | Xanthogendisulfid geregelt | | | |
| 2 | 0,5 | 1,0 | 5,0 | 80 | 3,0 | - | - | 65 | 0,45<br>0,75<br>1,5 |
| | entspricht Versuch II in Serie 4) | | | | | Mercaptan geregelt | | | |
| Vergleichsbeispiel | 0,8 | 0,9 | 4,0 | 78 | 0,7 | 0,6 | 0,65 | 65 | 2,2<br>2,5 |

**Serie 8):** Vergleich der erfindungsgemäßen Sol/Gel-Mischungen mit denen aus DE-OS 3 234 318 (Vergleichsbeispiel)
Anwendungstechnische Daten

| Abmischungsverhältnis Sol : Gel | Prüfmischung | Zugfestigkeit [mPa] | M bei 300 % Dehnung [mPa] | Oberflächenbeschaffenheit 1) der Extrudate (Prüfmischung 4) |
|---|---|---|---|---|
| 90 : 10 | 5 | 20,4 | 13,0 | 2 |
| 80 : 20 | 5 | 20,4 | 13,0 | 2 |
| 70 : 30 | 5 | 19,7 | 12,9 | 1 |
| 85 : 15 | 6 | 18,5 | 13,7 | 3 |
| 75 : 25 | 6 | 18,8 | 13,2 | 2 |
| 50 : 50 | 6 | 18,5 | 14,2 | 1 |
| 80 : 20 | 5* | 19,5 | 10,5 | 5 |
| 50 : 50 | 5* | 18,5 | 11,5 | 4 |

1) 1 = sehr gute Oberflächenbeschaffenheit

5 = schlechte Oberflächenbeschaffenheit

In die Bewertung geht die Rauhigkeit, Rissigkeit und Maßhaltigkeit der Extrudate ein.

* ohne Ethylenthioharnstoff

## Patentansprüche

1. Elastomere Masse aus Polychloropren-Sol und Polychloropren-Gel im Verhältnis 95:5 bis 25:75, vorzugsweise 90:10 bis 50:50, wobei das Polychloropren-Sol schwefelfrei ist, dadurch gekennzeichnet, daß als Polychloropren-Gel ein schwefelhaltiges Gel mit Xanthogenat- oder Carbamatfunktionen verwendet wird.

2. Elastomere Masse nach Anspruch 1, dadurch gekennzeichnet, daß ein Polychloropren-Gel verwendet wird, bei dem die Copolymerisation von Chloropren, Schwefel, und gegebenenfalls weiteren mit Chloropren copolymerisierbaren Monomeren mit Hilfe eines Peroxoaktivators in Gegenwart von Xanthogenaten oder Dithiocarbamaten, deren Anionen den Formeln

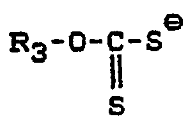

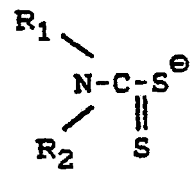

entsprechen, wobei
$R_1$, $R_2$, und $R_3$ einen gegebenenfalls substituierten Alkyl-, Cycloalkyl- oder Arylrest bedeuten,
$R_1$ und $R_2$ darüber hinaus zusammen mit dem Stickstoffatom einen Ring bilden können und die cyclischen Substituenten Heteroatome enthalten können,
in wäßriger Emulsion durchgeführt wird, wobei die Gelbildung durch Einbau einer Vernetzersubstanz und/oder durch hohen Umsatz bewirkt wird.

3. Elastomere Masse nach Anspruch 2, dadurch gekennzeichnet, daß 0,05 bis 5,0, insbesondere 0,1 bis 3,0 Gew.-%, Natriumdibutyldithiocarbamat, bezogen auf Monomere der Gelpolymeren, oder eine entsprechende molare Menge eines anderen Dithiocarbamates oder 0,1 bis 5,0, insbesondere 0,5 bis 3,0 Gew.-%, Kaliumethylxanthogenat, bezogen auf Monomere des Gelpolymers, oder eine entsprechende molare Menge eines anderen Xanthogenates, eingesetzt werden.

4. Elastomere Masse nach Anspruch 2, worin $R_1$ und $R_2$ $C_1$-$C_4$-Alkyl und $R_3$ $C_1$-$C_8$-Alkyl oder 2,2-(2,4-Dioxapentamethylen)-butyl bedeuten.

5. Elastomere Masse nach Anspruch 2, worin die Dithiocarbamate und Xanthogenate in Form ihrer Ammonium- oder Alkalisalze eingesetzt werden.

6. Verfahren zur Herstellung einer elastomeren Masse aus Polychloropren-Sol und Polychloropren-Gel im Verhältnis 95:5 bis 25:75, wobei das Polychloropren-Sol schwefelfrei ist, dadurch gekennzeichnet, daß man Chloropren, Schwefel und gegebenenfalls weitere mit Chloropren copolymerisierbare Monomere in Gegenwart von Xanthogenaten oder Dithiocarbamaten, deren Anionen den Formeln

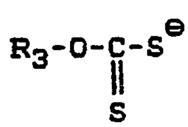

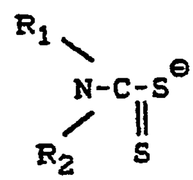

entsprechen, wobei
$R_1$, $R_2$ und $R_3$ einen gegebenenfalls substituierten Alkyl-, Cycloalkyl- oder Arylrest bedeuten,
$R_1$ und $R_2$ darüber hinaus zusammen mit dem Stickstoffatom einen Ring bilden können und die cyclischen Substituenten Heteroatome enthalten können,
in wäßriger Emulsion zu einem Polychloropren-Gel polymerisiert, wobei die Gelbildung durch Einbau einer Vernetzersubstanz und/oder durch hohen Umsatz bewirkt wird, den Polychloropren-Gel-Latex mit dem Polychloropren-Sol-Latex mischt und die Mischung in üblicher Weise aufarbeitet.

## Claims

1. An elastomeric composition of polychloroprene sol and polychloroprene gel in a ratio of 95:5 to 25:75 and preferably 90:10 to 50:50, the polychloroprene sol being sulfur-free, characterized in that a sulfur-containing gel containing xanthogenate or carbamate functions is used as the polychloroprene gel.

2. An elastomeric composition as claimed in claim 1, characterized in that the polychloroprene gel used is one in which the copolymerization of chloroprene, sulfur and optionally other monomers copolymerizable with chloroprene is carried out in aqueous emulsion using a peroxo activator in the presence of xanthogenates or dithiocarbamates of which the anions correspond to the formulae

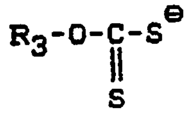
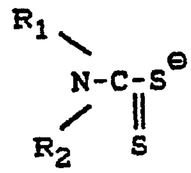

in which
$R_1$, $R_2$ and $R_3$ represent an optionally substituted alkyl, cycloalkyl or aryl radical, in addition to which $R_1$ and $R_2$ may form a ring with the nitrogen atom and the cyclic substituents may contain hetero atoms, the gel being formed by incorporation of a crosslinker and/or by high conversion.

3. An elastomeric composition as claimed in claim 2, characterized in that 0.05 to 5.0 and more particularly 0.1 to 3.0% by weight sodium dibutyl dithiocarbamate, based on monomers of the gel polymers, or a corresponding molar quantity of another dithiocarbamate or 0.1 to 5.0 and more particularly 0.5 to 3.0% by weight potassium methyl xanthogenate, based on monomers of the gel polymer, or a corresponding quantity of another xanthogenate are used.

4. An elastomeric composition as claimed in claim 2, in which $R_1$ and $R_2$ represent $C_{1-4}$ alkyl and $R_3$ represents $C_{1-8}$ alkyl or 2,2-(2,4-dioxapentamethylene)-butyl.

5. An elastomeric composition as claimed in claim 2, in which the dithiocarbamates and xanthogenates are used in the form of their ammonium or alkali salts.

6. A process for the production of an elastomeric composition of polychloroprene sol and polychloroprene gel in a ratio of 95:5 to 25:75, the polychloroprene sol being sulfur-free, characterized in that chloroprene, sulfur and optionally other monomers copolymerizable with chloroprene are copolymerized in aqueous emulsion in the presence of xanthogenates or dithiocarbamates of which the anions correspond to the formulae

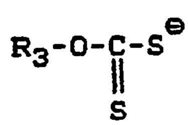
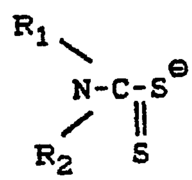

in which
$R_1$, $R_2$ and $R_3$ represent an optionally substituted alkyl, cycloalkyl or aryl radical, in addition to which $R_1$ and $R_2$ may form a ring with the nitrogen atom and the cyclic substituents may contain hetero atoms, to form a polychloroprene gel, the gel being formed by incorporation of a crosslinker and/or by high conversion, the polychloroprene gel latex is mixed with the polychloroprene sol latex and the mixture is worked up by standard methods.

**Revendications**

1. Composition élastomérique constituée d'un sol de polychloroprène et d'un gel de polychloroprène dans un rapport de 95:5 à 25:75, de préférence de 90:10 à 50:50, dans laquelle le sol de polychloroprène est dépourvu de soufre, caractérisée en ce qu'on utilise comme gel de polychloroprène un gel contenant du soufre, portant des fonctions xanthogénate ou carbamate.

2. Composition élastomérique suivant la revendication 1, caractérisée en ce qu'on utilise un gel de polychloroprène dans lequel la copolymérisation de chloroprène, de soufre et, le cas échéant, d'autres monomères copolymérisables avec le chloroprène est effectuée en émulsion aqueuse à l'aide d'un activateur peroxo en présence de xanthogénates ou de dithiocarbamates, dont les anions correspondent aux formules

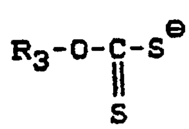
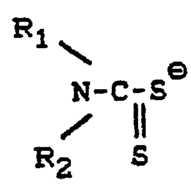

dans lesquelles
$R_1$, $R_2$ et $R_3$ désignent un reste alkyle, cycloalkyle ou aryle éventuellement substitué,
$R_1$ et $R_2$ peuvent former en outre un noyau conjointement avec l'atome d'azote et les substituants cycliques peuvent contenir des hétéro-atomes, la formation du gel étant provoquée par l'incorporation d'une substance de réticulation et/ou par un haut degré de réaction.

3. Composition élastomérique suivant la revendication 2, caractérisée en ce qu'on utilise 0,05 à 5,0, en particulier 0,1 à 3,0% en poids de dibutyldithiocarbamate de sodium par rapport aux monomères des polymères constituant le gel, ou une quantité molaire correspondante d'un autre dithiocarbamate ou 0,1 à 5,0, notamment 0,5 à 3,0% en poids de méthylxanthogénate de potassium, par rapport aux monomères du polymère constituant le gel, ou une quantité molaire correspondante d'un autre xanthogénate.

4. Composition élastomérique suivant la revendication 2, dans laquelle $R_1$ et $R_2$ désignent des groupes alkyle en $C_1$ à $C_4$ et $R_3$ est un groupe alkyle en $C_1$ à $C_8$ ou le groupe 2,2-(2,4-dioxapentaméthylène)-butyle.

5. Composition élastomérique suivant la revendication 2, dans laquelle les dithiocarbamates et les xanthogénates sont utilisés sous forme de leurs sels d'ammonium ou de métaux alcalins.

6. Procédé de préparation d'une composition élastomérique constituée d'un sol de polychloroprène et d'un gel de polychloroprène dans le rapport de 95:5 à 25:75, dans lequel le sol de polychloroprène est dépourvu de soufre, caractérisé en ce qu'on polymérise du chloroprène, du soufre et, le cas échéant, d'autres monomères copolymérisables avec le chloroprène en présence de xanthogénates ou de dithiocarbamates, dont les anions correspondent aux formules

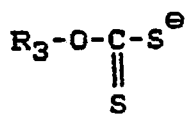

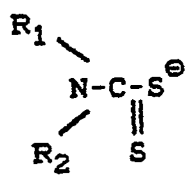

dans lesquelles
$R_1$, $R_2$ et $R_3$ désignent un reste alkyle, cycloalkyle ou aryle éventuellement substitué,
$R_1$ et $R_2$ peuvent en outre former un noyau conjointement avec l'atome d'azote et les substituants cycliques peuvent contenir des hétéro-atomes,
en émulsion aqueuse pour former un gel de polychloroprène, la formation du gel étant provoquée par l'incorporation d'une substance de réticulation et/ou par un haut degré de réaction, on mélange le latex de gel de polychloroprène avec le latex de sol de polychloroprène et on traite le mélange d'une manière classique.